# EUROPÄISCHE PATENTSCHRIFT

(11) **EP 2 893 359 B1**
(45) Veröffentlichungstag und Bekanntmachung des Hinweises auf die Patenterteilung: **28.03.2018**
(21) Anmeldenummer: 13771368.1
(22) Anmeldetag: 04.09.2013
(51) Int. Cl.: G01P 3/488, G01P 3/44, G01D 5/14, G01D 5/20, F16C 41/00, F16C 33/80, G01D 5/244

(54) **RESOLVERLAGER**
RESOLVER BEARING
PALIER RÉSOLVEUR

(30) Priorität: 10.09.2012 DE 102012215957
(43) Veröffentlichungstag der Anmeldung: 15.07.2015
(73) Patentinhaber: Schaeffler Technologies AG & Co. KG, 91074 Herzogenaurach (DE)
(72) Erfinder: KEGELER, Jörg, 98553 Schleusingen (DE)
(86) Internationale Anmeldenummer: PCT/DE2013/200155
(87) Internationale Veröffentlichungsnummer: WO 2014/037004

(56) Entgegenhaltungen:
- US-A- 5 939 878
- US-A1- 2006 104 558
- US-A1- 2009 289 622

## Beschreibung

### Gebiet der Erfindung

Die Erfindung betrifft ein sogenanntes Resolverlager, also eine Wälzlageranordnung mit einem Winkelsensor oder Drehzahlsensor nach dem Oberbegriff von Anspruch 1.

Eine gattungsgemäße Anordnung, welche ein Wälzlager sowie einen als Resolver bezeichneten, als Absolutwertgeber ausgebildeten Winkelsensor umfasst, ist beispielsweise aus der US 2006/0087315 A1 bekannt. Der Winkelsensor weist einen mit dem Außenring des Wälzlagers verbundenen Stator auf sowie einen mit dem Stator zusammenwirkenden Rotor, der als exzentrischer Ring ausgebildet und durch den Innenring des Wälzlagers gebildet ist.

Ein weiteres mit einem zur Erfassung eines Rotationsparameters vorgesehenen Sensor ausgestattetes Wälzlager ist aus der EP 1 518 126 B1 bekannt. In diesem Fall sind Mikrosende- und Mikroempfangsspulen des Sensors auf einem Träger, nämlich einem Substrat einer gedruckten Schaltung, angeordnet. Weiter ist auf dem Träger ein Verarbeitungsschaltkreis angeordnet, der einen Oszillator sowie Phasendemodulatoren enthält.

Aus der US 7,135,860 B2 ist ein nach dem Prinzip der variablen Reluktanz arbeitender Resolver bekannt, der einen Rotor mit mehreren Detektionsbereichen aufweist, was insbesondere einer zuverlässigen Nullpunkterkennung dienen soll.

Aus der WO002011134955 ist eine Wälzlageranordnung bekannt, welche zwei zu seiner Rotationsachse konzentrische, jeweils ein- oder mehrteilige Lagerringe, nämlich einen Innenring und einen Außenring, umfasst und wobei zwischen den Lagerringen mindestens eine Reihe Wälzkörper angeordnet ist. Ferner ist ein kreisringförmiger Dichtring vorhanden, welcher mit einem seiner beiden Ränder mit einem der Lagerringe verbunden ist und dessen freier Rand sich radial in Richtung des anderen Lagerrings erstreckt und welcher eine Seite des Ringsraums, welcher zwischen den Lagerringen gebildet ist und in welchem die Wälzkörper auf von den Lagerringen bereitgestellten Laufbahnen abrollen, abdichtet. An einer der Stirnflächen der Wälzlageranordnung ist ein Winkelsensor seitlich angekoppelt, um die Winkelstellung des ersten Lagerrings relativ zum zweiten Lagerring zu detektieren. Dieser Winkelsensor umfasst wenigstens eine Maßverkörperung, die mit einem der beiden Lagerringe drehfest verbunden ist, eine mit dem anderen der beiden Lageringe drehfest verbundenen Sendespule und mindestens eine ebenfalls mit dem anderen der beiden Lagerringe drehfest verbundenen Empfangsspule, wobei ein Signal über einen magnetischen Kreis zwischen der Sendespule und der Empfangsspule übertragbar und durch die Maßverkörperung eine variable Reluktanz in dem magnetischen Kreis gegeben ist. Im Einzelnen wird der magnetische Kreis dadurch bereitgestellt, dass die Sendespule in einem ringförmigen und einem U-förmigen Querschnitt aufweisenden Schalenkern angeordnet und über eine Reihe von Zwischenstücken mit einem der Lagerringe verbunden ist und dass die Maßverkörperung, die eine exzentrische Form hat und die mit dem anderen Lagerring verbunden ist, im Wesentlichen zwischen den Schenkeln des U-förmigen Querschnitts verläuft. Die Empfangsspule bzw. Empfangsspulen sind teilweise innerhalb und teilweise außerhalb des Schalenkerns angeordnet.

Ist die Maßverkörperung mit dem gegenüber dem Außenring drehbaren Innenring verbunden und wird der Innenring in Drehung versetzt, überdeckt die sich gleichfalls drehende, exzentrische Maßverkörperung zu jedem Zeitpunkt einer Drehung um 360° einen anderen Bereich des ringförmigen und hin zur Maßverkörperung offenen U-förmigen Querschnitts des Schalenkerns, wobei wegen der Gestaltung der Maßverkörperung und der Empfangsspule bzw. -spulen die gegenseitige Überdeckung langsam von einer minimalen Unterdeckungsfläche zu einer maximalen Überdeckungsfläche ansteigt, um dann von der maximalen Überdeckungsfläche bis zur Überdeckung "Null" abzufallen. Da i.ü. der Umfang der Überdeckung maßgeblich für den magnetischen Widerstand ist, werden entsprechend diesem Widerstand unterschiedlich große Spannungen in die Empfangsspule oder - spulen induziert.

Wie leicht einzusehen ist, ist der Aufbau solcher Resolverlager sehr aufwendig, denn zu seiner Realisierung müssen eine Reihe von unterschiedlichen Teilen bereitgestellt werden. Außerdem wird als nachteilig erachtet, dass durch die Verbindung von Wälzlageranordnung und Winkelsensor die Baubreite der Wälzlageranordnung in Richtung der Rotationsachse erheblich verbreitert wird.

### Aufgabe der Erfindung

Daher liegt der Erfindung die Aufgabe zugrunde, ein Resolverlager anzugeben, welches sehr einfach aufgebaut ist und nur sehr wenig Bauraum beansprucht.

### Zusammenfassung der Erfindung

Diese Aufgabe wird mit den Merkmalen von Anspruch 1 gelöst. Vorteilhafte Aus- und Weiterbildungen der Erfindung sind den Ansprüchen 2 bis 8 entnehmbar.

Sind gemäß Anspruch 1 die Lagerringe und ein zwischen den Lagerringen vorgesehenes Bauteil aus einem magnetisch permeablen Werkstoff gebildet, ist der Kreisringscheibe in geringem axialen Abstand A eine weitere Kreisringscheibe nebengeordnet, welche allerdings mit dem anderen Ring drehfest verbunden ist und sich ebenfalls radial in Richtung des Rings erstreckt, mit welchem diese weitere Kreisringscheibe nicht verbunden ist. Ist jede Kreisringscheibe mindestens mit einem Segment 15.1, 15.2 aus einem magnetisch permeablen Werkstoff versehen, und sind die jeweiligen Spulen P1, S1 im Ringraum zwischen den beiden Kreisringscheiben und dem Bauteil drehfest mit den Ringen verbunden, wird ein sehr einfach aufgebautes Resolverlager geschaffen, ohne dass die Spulen eine besondere Lage im sogenannten Eisenkreis zu den die Modulierung des Magnetflusses bewirkenden Segmenten einnehmen müssen.

Nur der Vollständigkeit sei schon an dieser Stelle darauf hingewiesen, dass unter dem Begriff magnetisch permeabler Werkstoffe solche verstanden werden, die einen signifikant geringeren magnetischen Widerstand als Luft haben. In Betracht kommen dabei insbesondere ferromagnetische Stoffe, wie z.B. Eisen, Ferrit oder auch kunststoffgebundenes Eisenpulver.

Wird gemäß Anspruch 2 das mit den Ringen in Verbindung stehende Bauteil von den auf den Laufbahnen abrollenden Wälzkörpern gebildet, entspricht das Resolverlager weitgehend einem konventionellen Lager, so dass zur Bildung eines Resolverlagers vollständig auf für konventionelle Lager übliche Bauteile zurückgegriffen werden kann. Auch muß nicht auf die Meßfunktion von Resolverlagern verzichtet werden, wenn die Wälzkörper ungeeignet erscheinen, den Magnetkreis zu schließen. In diesem Fall ist es lediglich erforderlich, sog. Kurzschlußbleche vorzusehen, welche ausgehend von einer drehfesten Verbindung mit einem der Lagerringe sich in Richtung des anderen Lagerrings erstrecken und welche geeignet sind, einen Magnetkreis zu schließen. Auch trägt die Verwendung von kreisringförmigen Kurzschlussblechen zur Verbesserung der Abdichtung des Lagers bei, da durch diese Kurzschlußbleche eine zusätzliche Spaltdichtung geschaffen wird. Eine ausreichende Abdichtung des Resolverlagers ist gemäß Anspruch 3 dann gegeben, wenn der Ringraum zwischen den Ringen gegenüber der Umwelt vollständig von Kreisringscheiben abgedichtet ist, indem neben den beiden schon vorhandenen Kreisringscheiben zwei weitere, in geringem axialen Abstand A zueinander angeordnete Kreisringscheiben vorgesehen sind, wobei jede dieser weiteren Kreisringscheiben mit einem anderen Ring drehfest verbunden ist und sich radial in Richtung des jeweils anderen Rings erstreckt.

Neben Sinussignalen können auch Kosinussignale an einem Resolverlager erzeugt werden, wenn gemäß Anspruch 4 jede der weiteren Kreisringscheiben mit mindestens einem Segment aus einem magnetisch permeablen Werksstoff versehen ist, die Segmente der weiteren Kreisringscheiben um einen Winkel von 90°/n gegeneinander verdreht sind, wobei n der Anzahl der Segmente je Kreisringscheibe entspricht, während in dieser Stellung der Segmente der weiteren Kreisringscheiben die Segmente der anderen Kreisringscheiben keinen gegenseitigen Winkelversatz zueinander einnehmen, eine weitere Ringspule P2 und eine weitere Sekundärspule S2 vorgesehen ist und diese Spulen P2, S2 im Ringraum zwischen den weiteren Kreisringscheiben und den Wälzkörpern und /oder einem Kurzschlussblech drehfest mit den Ringen verbunden sind. Wie dabei der Winkelversatz der Segmente letztlich realisiert ist, ist gleichgültig. So können beispielsweise die Segmente der Kreisringscheiben, die mit dem drehenden Lagerring drehfest verbunden sind, den Winkelversatz von 90°/n haben, während die Segmente von den beiden verbleibenden, mit dem stehenden Lagerring drehfest verbundenen Kreisringscheiben eine vollständige Überdeckung in axialer Richtung haben. Da es allein auf den Grad der Überdeckung von Segmenten von zwei verschiedenen, eine gemeinsame Dichtung ausbildenden Kreisringscheiben ankommt, spielt es später keine Rolle mehr, wenn nach einmaliger Ausrichtung im vorstehenden Sinne, sich zwei, eine Dichtung zwischen sich ausbildenden Kreisringscheiben um ein gleiches Winkelmaß gegenüber den beiden, die andere Dichtung realisierenden Kreisringscheiben verdrehen. Nur der Vollständigkeit sei darauf hingewiesen, dass eine Ausrichtung der Kreisringscheiben dann besonders einfach ist, wenn an Lagerringen und den Kreisringscheiben zueinander komplementäre Vorsprünge und Nuten vorgesehen sind, die ein Verbinden der jeweiligen Kreisringscheiben und den entsprechenden Lagerringen nur in einer relativen Stellung zueinander erlaubt.

Eine besonders einfache Art der elektrischen Kontaktierung der Spulen ist gemäß Anspruch 5 dann realisiert, wenn die Spulen jeweils mit dem stehenden der beiden Ringe verbunden sind.

Präzise Winkelangaben sind mit dem Resolverlager gemäß Anspruch 6 dann gegeben, wenn jede Kreisringscheibe eine Mehrzahl von Segmenten aufweist, die gleichmäßig in Umfangsrichtung der Kreisringscheiben verteilt angeordnet sind.

Die Ausbildung von Kreisringscheiben ist gemäß Anspruch 7 vereinfacht, wenn die Kreisringscheiben aus einem Werkstoff gebildet sind, der keine oder nur eine sehr geringe magnetische Permeabilität hat, und die Segmente in den Kreisringscheiben eingebettet angeordnet sind. Besonders einfach ist die Ausbildung von Kreisringsscheiben etwa dann, wenn die Kreisringscheiben aus Kunststoff hergestellt sind und die Segmente gleich bei der Ausbildung der Kreisringscheiben mit eingebettet worden sind.

Eine besondere Montagefreundlichkeit ist gemäß Anspruch 8 dann gegeben, wenn entweder eine der Spulen P, S oder eine Einheit aus zwei Spulen, die mit der Modulationswirkung von zwei Kreisringscheiben in Verbindung stehen, zusammen mit einer der beiden Kreisringscheiben eine Baueinheit bilden, indem die entsprechende Kreisringscheibe seitlich an die Spule P oder S oder die Einheit von zwei Spulen angesetzt und verbunden ist, und die jeweilige Baueinheit als solche in den Ringraum eingesetzt und mit dem jeweiligen Ring drehfest verbunden ist. Unter eingesetzt im Zusammenhang mit dieser Anmeldung wird sowohl das vollständige als auch das nicht vollständige Einschieben der Einheit in den Ringraum verstanden.

### Kurze Beschreibung der Zeichnung

Es zeigen:
- Fig.1: ein Resolverlager im Schnitt;
- Fig. 2a, 2b: je eine Seitenansicht eines Resolverlagers gemäß Fig. 1;
- Fig. 3: eine Dichtung in Detail;
- Fig.4: vier Kreisringscheiben; und
- Fig.5: ein weiteres Resolverlager im Schnitt.

### Detaillierte Beschreibung der Zeichnung

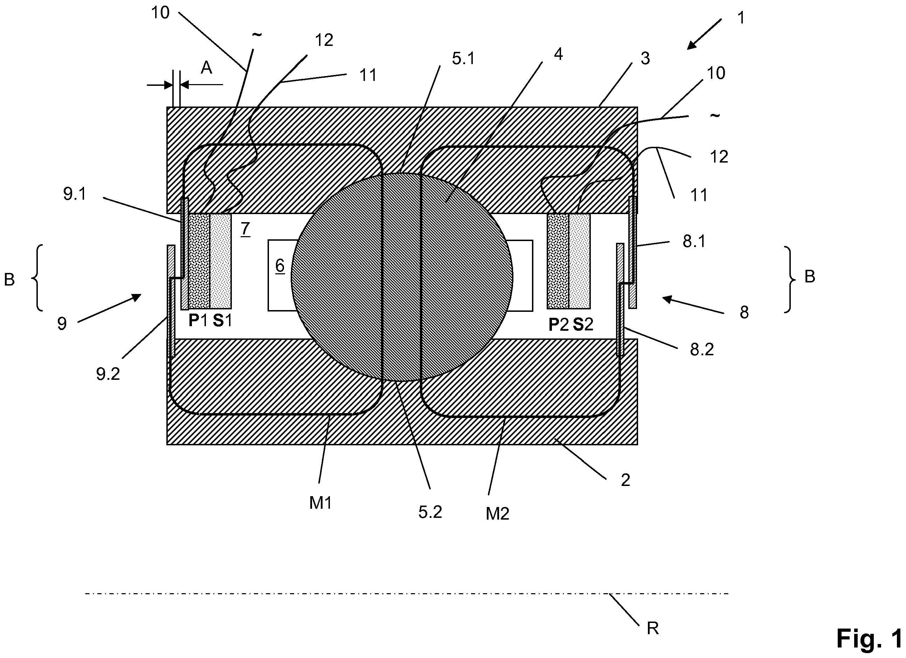

In Fig. 1 ist ein Resolverlager 1 im Schnitt oberhalb der Rotationsachse R gezeigt. Dieses Resolverlager 1 wird von einem Innenring 2, einem Außenring 3 und Wälzkörpern 4 gebildet, die auf von den Ringen 2, 3 bereitgestellten Laufbahnen 5.1, 5.2 abrollen. Dabei sind die Ringe 2, 3 und die Wälzkörper 4 aus einem magnetisch permeablen Werkstoff gebildet. Ferner ist im Ausführungsbeispiel gemäß Fig. 1 ein Käfig 6 vorhanden, der die Wälzkörper 4 führt.

Der Ringraum 7 zwischen den Lagerringen 2, 3 ist gegenüber Umwelteinflüssen durch Dichtungen 8, 9 geschützt, und zwar dergestalt, dass jede dieser Dichtungen 8, 9 von einer mit dem Innenring 2 drehfest verbundenen ersten Kreisringscheibe 8.1, 9.1 und einer mit dem Außenring 3 ebenfalls drehfest verbundenen Kreisringscheibe 8.2, 9.2 gebildet ist. Die Durchmesser der beiden jeweils eine Dichtung 8 oder 9 bildenden Kreisringscheiben 8.1, 8.2 und 9.1, 9.2 sind so gewählt, dass jede der beiden Dichtungen 8, 9 einen Bereich B aufweist, in welchem die ersten Kreisringscheiben 8.1, 9.1 bei Blick auf die Wälzkörper 4 entlang der Rotationsachse R die zweiten Kreisringscheiben 8.2, 9.2 teilweise abdeckt. Im in Fig. 1 gezeigten Ausführungsbeispiel ist dies so gelöst, dass die mit dem Außenring 3 verbundenen Kreisringscheiben 8.1, 9.1 lediglich bis an den Innenring 2 heranreichen, ohne diesen zu berühren, während die Kreisringscheiben 8.2, 9.2, die mit dem Innenring 2 verbunden sind, einen geringen radialen Abstand zum Außenring 3 einhalten. Ferner ist Fig. 1 auch entnehmbar, dass die beiden, jeweils eine Dichtung 8, 9 bildenden Kreisringscheiben 8.1, 8.2 und 9.1, 9.2 einen gegenseitigen axialen Abstand A einhalten, der eine Spaltdichtung bildet und der im folgenden auch Luftspalt genannt wird.

Ferner sind im Ringraum 7 zwei Ringspulen P1, P2 untergebracht, die im in Fig. 1 gezeigten Ausführungsbeispiel mit dem stehenden Außenring 2 drehfest verbunden sind und über die Anschlußleitungen 10 von einer Wechselstromquelle ∼ bestrombar sind. Verzichtet man auf die besonders einfache Art der Kontaktierung am stehenden Lagerring 2, kann in einem anderen - nicht näher gezeigten- Ausführungsbeispiel eine oder auch alle Ringspulen P1, P2 mit dem drehenden der beiden Lageringe 2 oder 3 drehfest verbunden sein. In diesem Fall sind die Spulen P1, P2 über dem Fachmann bekannte Schleifringe zu kontaktieren. Werden die Ringspulen P1, P2 bestromt, bilden sich zwei Magnetkreise M1 und M2 aus, auf die im folgenden noch näher eingegangen wird.

Jeder dieser beiden Ringspulen P1, P2 ist eine Sekundärspule S1, S2 in axialer Richtung nebengeordnet, wobei im in Fig. 1 gezeigten Ausführungsbeispiel die Ringspule P1 an die Sekundärspule S1 und die Ringspule P2 an die Sekundärspule S2 abstandslos angrenzt. Diese Abstandslosigkeit hat - wie leicht einzusehen ist- Vorteile bei der Herstellung und Montage, da die Einheit aus Ring- und Sekundärspule P1, S2; P2, S2 außerhalb des Lagers 1 vorgefertigt und als Einheit mit dem jeweiligen Lagerring 2 (3) verbunden werden kann. Begibt man sich dieses Herstellungs- und Montagevorteils, können die Sekundärspulen S1 und S2 auch einen axialen Abstand zu ihren jeweiligen Ringsspulen P1, P2 einhalten, sofern die Sekundärspulen S1, S2 innerhalb des jeweiligen Magnetkreises M1, M2 der ausgehend von den Ringspulen P1, P2 und den als Joch dienenden Bauteilen des Lagers angeordnet bleiben. Letzteres schließt auch ein, dass die jeweiligen Sekundärspulen S1, S2 nicht notwendig mit dem Lagerring 2; 3 verbunden sein müssen, an welchem die der jeweiligen Sekundärspule S1, S2 zugehörige Ringspule P1; P2 drehfest angeordnet ist.

Nur der Vollständigkeit halber sei darauf hingewiesen, dass im Zusammenhang mit dieser Anmeldung unter den Begriffen Ringspule P, Sekundärspule S und/oder Spulen P, S eine durchgängige, um die Rotationsachse R verlaufende Wicklung eines Drahtes verstanden wird. Diese ringförmige Ausbildung der erfindungsgemäß verwendeten Spulen ist auch deshalb vorteilhaft, weil diese Art der Spulen bei der Verwendung einer Mehrzahl von Segmenten 15 je Kreisringscheibe 8.1, 8.2, 9.1, 9.2 diese Segmente 15 je Kreisringscheibe nicht -wie sonst bei Resolvern üblich- zur Gewährleistung einer magnetischen Trennung als Einzelsegmente ausgebildet werden müssen, sondern nach der Erfindung auch als einstückige, lediglich in Umfangsrichtung eine entsprechende Zahnung aufweisende Bauteile ausgebildet werden können.

Zur weiteren Herstellungs- und Montagevereinfachung ist in Fig. 1 zusätzlich auch noch die Kreisringscheibe 9.1 mit der Einheit aus den beiden Spulen P1, S1, die mit den beiden Kreisringscheiben 9.1, 9.2 magnetisch zusammenwirken, vor dem Einsetzen in den Ringraum 7 verbunden worden.

Ferner ist Fig. 1 entnehmbar, dass die Sekundärspulen S1, S2 über Abgangsleitungen 11 mit einer Auswerteelektronik 12 verbunden sind. Wie schon im Zusammenhang mit den Ringspulen P1, P2 ausgeführt, ist auch die Kontaktierung der Sekundärspulen S1, S2 besonders einfach, weil im in Fig. 1 dargestellten Ausführungsbeispiel die Sekundärspulen S1, S2 ebenfalls mit dem stehenden Lagerring 3 verbunden sind.

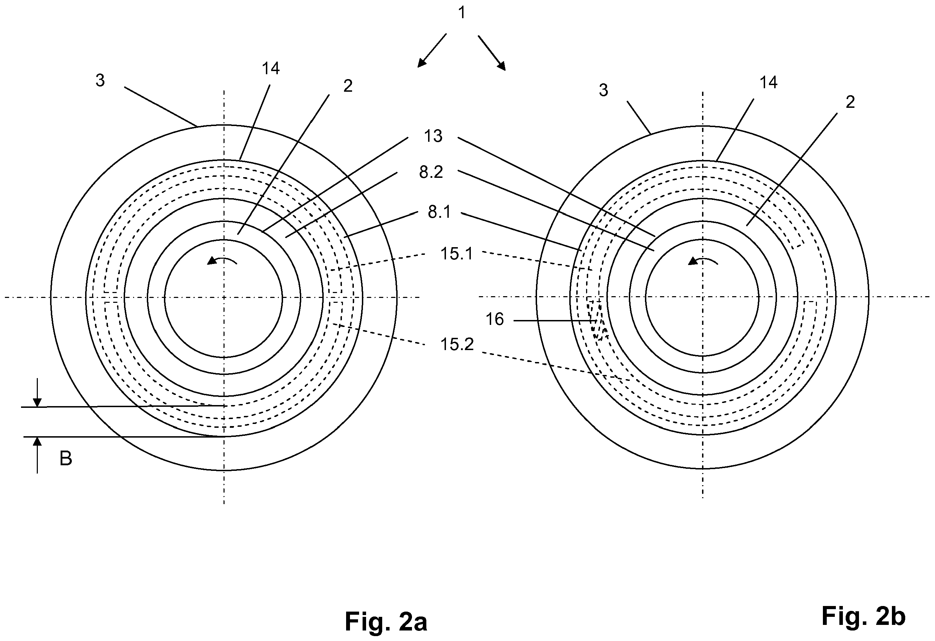

In den Fig. 2a und 2b ist eine Seitenansicht auf ein Resolverlager 1 gemäß Fig. 1 gezeigt. Deutlich ist dieser Darstellung, welche eine Sicht auf die Dichtung 8 zum Gegenstand hat, der Aufbau des Resolverlagers 1 entnehmbar. An dem äußeren Umfang 13 des Innenrings 2 ist die Kreisringscheibe 8.2 angesetzt, während der innere Umfang 14 des Außenrings 3 mit der Kreisringscheibe 8.1 verbunden ist. Da die Kreisringscheibe 8.2 bis fast an den Außenring 3 bzw. die Kreisringscheibe 8.1 an den Innenring 2 heranreicht, stellt sich beim Blick auf die Dichtung 8 gemäß Fig. 1 der schon erörterte Bereich B ein, in welchem die Kreisringscheibe 8.1 die Kreisringscheibe 8.2 überdeckt.

Jede der Kreisringscheiben 8.1, 8.2, 9.1 und 9.2 ist im Wesentlichen aus Kunststoff gebildet und weist in ihrem Inneren ein Segment 15 auf, welches aus einem Werkstoff mit hoher Permeabilität gebildet ist. In einem einfachen Ausführungsbeispiel können diese Segmente aus Blech gestanzt und zur Bildung einer Kreisringscheibe 8.1, 8.2, 9.1 und/oder 9.2 in ein entsprechendes Spritzgusswerkzeug eingelegt und umspritzt sein.

Nur der Vollständigkeit halber sei darauf hingewiesen, dass der Begriff Segment 15 auch sogenannte Blechschnitte, Schlitzbleche, Lochbleche oder Flügelräder umfaßt, die in Umfangsrichtung der im Wesentlichen aus Kunststoff gebildeten Kreisringscheiben 8.1, 8.2. 9.1, 9.2 gleichmäßig verteilt angeordnet sind und die magnetisch leitend mit dem jeweiligen Lagerring 2, 3 verbunden sind.

Im in dem in den Fig. 2a und 2b gezeigten Ausführungsbeispiel sind die beiden Kreisringscheiben 8.1 und 8.2 nur jeweils mit einem Segment 15.1, 15.2 versehen, wobei jedes dieser Segmente 15.1, 15.2 einen Kreisring mit einen Öffnungswinkel von 180° beschreibt. Die Lage der beiden Segmente 15.1, 15.2 in den beiden Kreisringscheiben 8.1, 8.2 der Dichtung 8 ist so aufeinander abgestimmt, dass bei gegenseitiger Verdrehung der beiden Lagerringe 2, 3 bzw. Kreisringscheiben 8.1, 8.2 die beiden Segmente 15.1, 15.2 sich gegenseitig überdecken können. Wird nun ausgehend von Fig. 2a, in welcher die beiden Segmente 15.1, 15.2 sich gegenseitig nicht überdecken, bei stehendem Außenring 3 der Innenring 2 entsprechend der Pfeilrichtung in Drehung versetzt , stellen sich Verhältnisse ein, die in Fig. 2b gezeigt sind. Deutlich ist der Darstellung gemäß Fig. 2b entnehmbar, dass bei einer Drehung des Innenrings 2 gegenüber dem Außenring 3 um etwa 20° beide Segmente 15.1, 15.2 einen Überdeckungsbereich 16 von etwa 20° bilden, der zur besseren Darstellung der Verhältnisse mit einer Schraffierung versehen ist. Mit zunehmender Verdrehung des Innenrings 2 gegenüber dem Außenring 2 wird ein Punkt erreicht, an welchem sich dann beide Segmente 15.1, 15.2 vollständig überdecken und von welchem dann, eine weitere Verdrehung vorausgesetzt, die Überdeckung wieder abnimmt, bis sich Verhältnisse einstellen, die in Fig. 2a gezeigt sind.

Auch wenn in Fig. 1 ein Resolverlager 1 gezeigt ist, dessen Ringraum 7 gegenüber der Umwelt mit zwei Dichtungen 8, 9 verschlossen ist, die die von den Ringspulen P1, P2 erzeugten Magnetfelder modulieren, kann in einem anderen -nicht näher gezeigten- Ausführungsbeispiel bloß eine den Magnetkreis M1 oder M2 modulierende Dichtung 8 oder 9 vorgesehen sein, während die andere Seite des Ringraums 7 mit einer konventionellen, d.h. auf den Magnetfluß keinen Einfluß habenden Dichtung verschlossen sein kann. In diesem Fall wird die Drehrichtung nicht erfasst, so dass eine solche Ausführung etwa als Drehzahlsensor genutzt werden kann.

Wird die Ringspule P1 gemäß Fig. 1 bestromt, bildet sich um die Ringspule P1 herum ein Magnetkreis M1 aus, indem die magnetischen Feldlinien die geringen magnetischen Widerstände im Außenring 3, den Wälzkörpern 4, im Innenring 2 und in den Segmenten 15.1, 15.2 zur Bildung eines Magnetkreise M1 nutzen. Da die Kreisringscheiben 8.1, 8.2 der Dichtung 8 gegeneinander verdrehbar sind und mit gegenseitiger Verdrehung sich der Überdeckungsbereich 16 der beiden Segmente 15.1, 15.2 ändert, ändert sich auch der magnetische Fluss durch die Kreisringscheiben 8.1, 8.2 . Mit anderen Worten: die Verdrehung der Segmente 15.1, 15.2 zueinander wirkt auf den magnetischen Fluss in den jeweiligen Magnetkreisen M1, M2 wie ein Modulator. Wie leicht einzusehen ist, werden bei Kreisringscheiben 8.1, 8.2 bzw. 9.1, 9.2, die jeweils nur ein Segment 15 mit hoher magnetischer Permeabilität haben, pro Umdrehung des Innenrings 2 gegenüber dem Außenring 3 ein Minimum und ein Maximum im magnetischen Fluss durch das Resolverlager 1 erzeugt, wobei sich zwischen dem Maximum und dem Minimum bzw. Minimum und Maximum auch noch Zwischenwerte einstellen. Diese sich pro Umdrehung ergebenden Flussänderungen können von der Sekundärspule S2 erfasst werden und unter Nutzung der Auswerteelektronik 12 beispielsweise zur Ermittlung der Drehzahl oder der Winkelstellung des Innenrings 2 gegenüber dem Außenring 3 herangezogen werden.

Besonders exakte Aussagen über die Winkelstellung von Innenring 2 und Außenring 3 sind dann gegeben, wenn neben dem sog. Sinussignal auch noch ein Kosinussignal generiert wird. Dies wird im Ausführungsbeispiel gemäß Fig. 1 dadurch realisiert, dass auch die Dichtung 9 ebenso wie die Dichtung 8 von zwei Kreisringscheiben 9.1, 9.2 gebildet wird und jede dieser Kreisringscheiben 9.1. 9.2 mit einem Segment 15.1, 15.2 der schon im Zusammenhang mit der Dichtung 8 erläuterten Art versehen ist. Zur Erzeugung des Kosinussignals sind allerdings die Segmente 15.1, 15.2 an den Kreisringscheiben 9.1, 9. 2 gegenüber denjenigen an den Kreisringscheiben 8.1, 8.2 um 90° verdreht angeordnet. Diese Verdrehung um 90° bewirkt, dass jeweils ein Flussmaximum, welches beispielsweise durch das Zusammenwirken der Kreisringscheiben 8.1, 8.2 entsteht, mit einem Nulldurchgang an der anderen Dichtung 9 zusammentrifft.

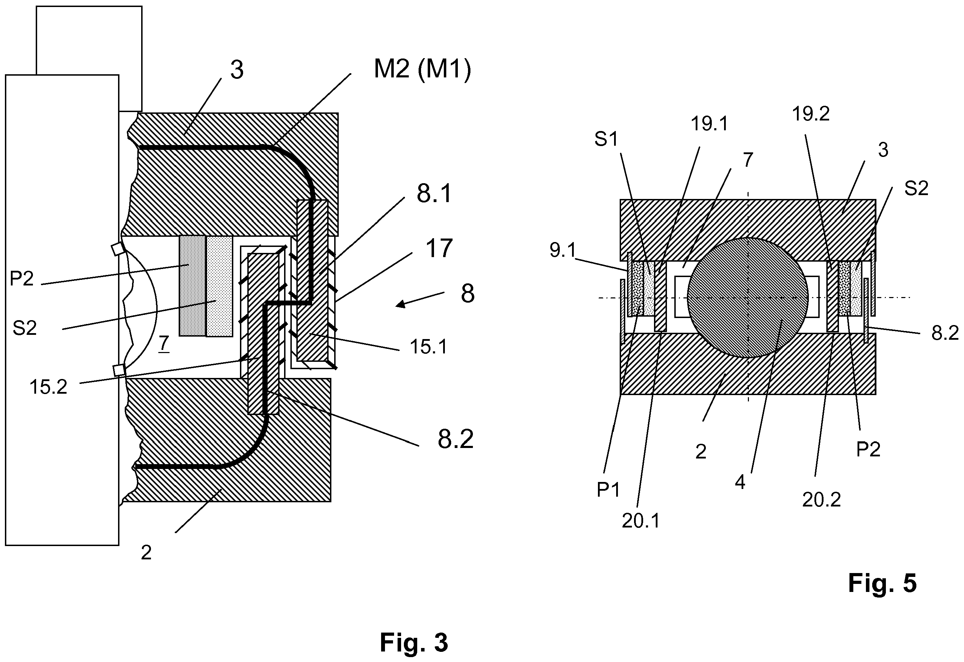

Ein besonders guter Magnetkreis M1 (M2) bildet sich dann aus, wenn im Gegensatz zu den Darstellungen gemäß Fig. 2a und 2b die Segmente 15.1, 15.2 bis in die Lagerringe 2, 3 geführt sind. Eine solche Führung von Segmenten 15.1, 15.2 bis in die Lagerringe 2, 3 ist in Fig. 3 gezeigt. Auch ist Fig. 3 entnehmbar, dass die Segmente 15.1, 15.2 von einer dünnen Schicht 17 aus Kunststoffmaterial überzogen sind, welche im Übrigen auch in Umfangsrichtung die Zwischenräume zwischen den Segmenten 15 einer Kreisringscheibe 8.1, 8.2 ausfüllt und welche mithin zur Bildung der Kreisringscheiben 8.1, 8.2 beiträgt. Sofern es magnetisch erforderlich ist, kann das Kunststoffmaterial auch nur auf die Zwischenräume zwischen den Segmenten 15 beschränkt sein, so dass dann die Segmente 15 unbeschichtet bleiben. Auch wenn im in Fig. 3 gezeigten Ausführungsbeispiel die Dichtung 8 die einzige den Magnetfluß durch das Resolverlager 1 modulierende Dichtung ist, welche den Ringraum 7 gegenüber der Umwelt abdichtet, kann natürlich die andere der Dichtung 8 axial gegenüberliegende Seite des Resolverlagers 1 entweder mit einer konventionellen, den Magnetfluß nicht oder aber -so wie in Fig. 1 gezeigt- mit einer magnetisch aktiven Dichtung 9 gegenüber der Umwelt verschlossen sein.

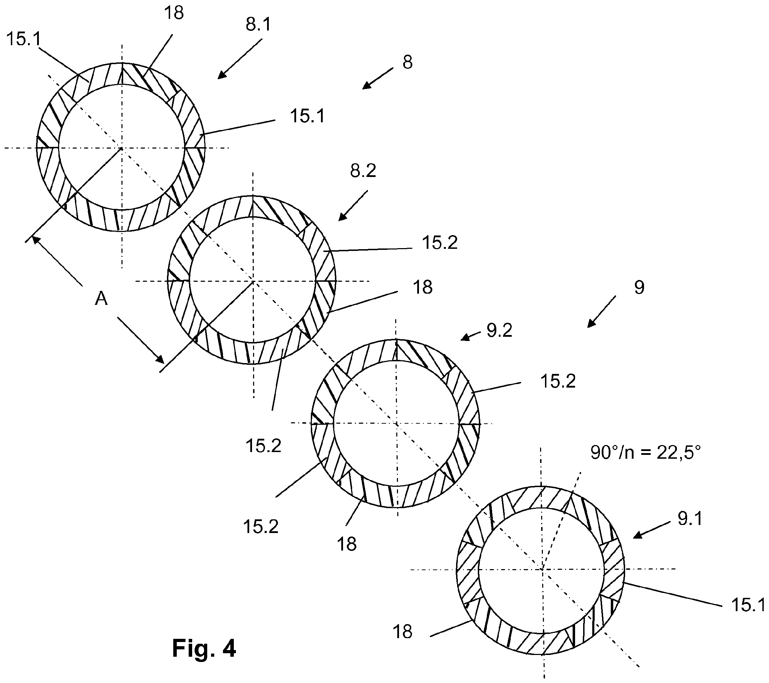

In Fig. 4 sind zwei eine Dichtung 8 bildende Kreisringscheiben 8.1, 8.2 gezeigt, deren Luftspalt A aus Gründen der besseren Darstellung in axialer Richtung vergrößert dargestellt ist. Die dort gezeigte Kreisringscheibe 8.1 wird von vier Segmenten 15.1 aus einem Material, welches eine hohe Permeabilität hat, und vier Bereichen 18, die aus Kunststoff bestehen, gebildet, wobei sich die Segmente 15.1 und die Bereiche 18 in Umfangsrichtung dieser Kreisringscheiben 8.1 abwechseln. Der Aufbau der Kreisringscheibe 8.2 entspricht dem der Kreisringscheibe 8.1. Diese Entsprechung der beiden Kreisringscheiben 8.1 und 8.2 schließt auch die Anzahl und die Größe der Segmente 15.1, 15.2 und der Bereiche 18 ein. Diese Erhöhung der Anzahl von Segmenten 15.1, 15.2 je Kreisringscheibe 8.1, 8.2 bewirkt, dass pro Umdrehung der einen Kreisringscheibe 8.1 gegenüber der anderen Kreisringscheibe 8.2 eine entsprechende Erhöhung der Frequenz bei gleicher Amplitude des Signals erhalten wird, wodurch die Genauigkeit des Resolverlagers 1 gegenüber einem solchen gesteigert ist, welches nur über ein Segment 15.1, 15.2 pro Kreisringscheibe 8,1, 8.2 verfügt.

Zur Erzeugung eines Kosinussignals .ist Dichtung 8 gemäß Fig. 4 mit einer weiteren Dichtung 9 kombiniert, die ebenso wie die Dichtung 8 von zwei Kreisringscheiben 9.1, 9.2 gebildet wird. Jede dieser die Dichtung 9 bildenden Kreisringscheiben 9.1, 9.2 weist ebenfalls vier Segmente 15.1, 15.2 aus einem magnetisch permeablen Werkstoff auf, die in Umfangsrichtung der Kreisringscheiben 9.1, 9.2 durch Bereiche 18 aus Kunststoff getrennt sind. Um das Kosinussignal zu bilden, sind beiden Kreisringscheiben 8.2, 9.2 mit dem jeweils drehenden Lagerings 2 (in Fig. 4 nicht gezeigt) drehfest verbunden, wobei in Richtung der Rotationsachse R die Segmente 15.2 und die Bereiche 18 von beiden Kreisringscheiben 8.2, 9.2 einander gegenüberstehen. Die Segmente 15.1 und die Bereiche 18 der beiden Kreisringscheiben 8.1, 9.1, die mit dem stehenden Lagering 3 (in Fig. 4 nicht gezeigt) verbunden sind, sind mit Rücksicht auf die vier Segmente 15.1 in jeder der beiden Kreisringscheiben 8.1, 9.1 die Segmente 15.1 der Kreisringscheibe 9.1 gegenüber der Segmenten 15.1 der Kreisringscheibe 8.1 um 90° / die Anzahl der Segmente je Kreisringscheibe = 22, 5° verdreht angeordnet, so daß mit Blick in Richtung der Rotationsachse R jedes Segment 15.1 der Kreisringscheibe 8.1 die Hälfte eines Segments 15.1 und eines Bereichs 18 der Kreisringscheibe 9.1 überdreckt.

Im Gegensatz zur Ausführung gemäß Fig. 1 sind in Fig. 5 die von den Ringspulen P1 und P2 erzeugten Magnetkreise (in Fig. 5 nicht gezeigt) nicht unter Wirkung der Wälzkörper 4 geschlossen, weil die Wälzkörper 4 aus Keramik hergestellt sind. Deshalb sind zwei kreisringförmige Kurzschlussbleche 19.1, 19.2 aus einen magnetisch permeablen Werkstoff vorgesehen, welche die jeweiligen Magnetkreise M1, M2 (in Fig. 5 nur angedeutet) schließen und welche den Wälzkörpern 4 in axialer Richtung nebengeordnet sind. Diese Kurzschlussbleche 19.1, 19.2 sind im in Fig. 5 dargestellten Ausführungsbeispiel mit dem Außenring 3 drehfest verbunden und bilden in Bezug zum Innenring 2 einen weiteren Dichtspalt 20.1, 20.2 aus. Wie schon im Zusammenhang mit Fig. 1 ausgeführt, sind im Zusammenhang mit Fig. 5 zur Vereinfachung der Montage das Kurzschlussblech 19.1 (19.2), die Ringspule P1 (P2), die Sekundärspule S1 (S2) und die Kreisringscheibe 9.1 (8.2) vor ihrem Einsetzen in den Ringraum 7 zwischen die beiden Lagerringe 2, 3 verbunden worden. Nur der Vollständigkeit halber sei darauf hingewiesen, dass diese Kurzschlussbleche 19.1, 19.2 auch dann Verwendung finden können, wenn die Wälzkörper 4 aus einem magnetisch permeablen Werkstoff gebildet sind, aber befürchtet werden muß, dass durch in den Laufbahnen 5.1, 5.2 (Fig.1) der Ringe 2, 3 vorhandenes Schmiermittel den magnetischen Schluß zumindest zeitweise beeinträchtigt.

### Bezugszeichenliste

- 1: Resolverlager
- 2: Innenring
- 3: Außenring
- 4: Wälzkörper
- 5.1, 5.2: Laufbahnen
- 6: Käfig
- 7: Ringraum
- 8: Dichtung
- 8.1, 8.2: Kreisringscheibe Dichtung 8
- 9: Dichtung
- 9.1, 9.2: Kreisringscheibe Dichtung 9
- 10: Anschlußleitung
- 11: Abgangsleitung
- 12: Auswerteelektronik
- 13: äußerer Umfang
- 14: inner Umfang
- 15.1, 15.2: Segment
- 16: Überdeckungsbereich
- 17: Schicht
- 18: Bereiche
- 19.1, 19.2: Kurzschlussbleche
- 20.1, 20.2: Dichtspalt

## Patentansprüche

1. Resolverlager mit
einem Innenring 2, einem Außenring 3 und Wälzkörpern 4, die im zwischen den Ringen 2, 3 gebildeten Ringraum 7 auf von den Ringen 2, 3 bereitgestellten Laufbahnen 5.1, 5.3 abrollen,
einer Kreisringscheibe 8.1 , welche zur Abdichtung des Ringraumes 7 mit einem der Ringe 2, 3 drehfest verbunden ist und sich im Wesentlichen radial in Richtung des anderen Rings 2, 3 erstreckt,
einer Primärspule P1 und einer Sekundärspule S1 -und
einem Segment 15, welches aus einem magnetisch permeablen Werkstoff gebildet ist,
**dadurch gekennzeichnet,**
**dass** die Ringe 2, 3 und ein zwischen den Ringen 2, 3 vorgesehenes Bauteil 4, 19 aus einem magnetisch permeablen Werkstoff gebildet sind,
**dass** der Kreisringscheibe 8.1 in geringem axialen Abstand A eine weitere Kreisringscheibe 8.2 nebengeordnet ist, welche allerdings mit dem anderen Ring 2, 3 drehfest verbunden ist und sich aber ebenfalls radial in Richtung des Rings 2, 3 erstreckt, mit welchem die weitere Kreisringscheibe 8.2 nicht verbunden ist,
**dass** jede Kreisringscheibe 8.1, 8.2 mindestens ein Segment 15.1, 15.2 aus einem magnetisch permeablen Werkstoff ausweist, und
**dass** die jeweiligen Spulen P1, S1 als Ringspule ausgebildet sind und durchgängig um die Rotationsachse R des Lagers verlaufen und im Ringraum 7 zwischen beiden Kreisringscheiben 8.1, 8.2 und dem Bauteil 4, 19 drehfest mit einem der Ringe 2, 3 verbunden sind
und **dass** der Innnenring 2, der Außenring 3, das Bauteil 4,19 und die Segmente 15.1, 15.2 einen Magnetkreis M1 bilden.

2. Resolverlager nach Anspruch 1
**dadurch gekennzeichnet,**
**dass** das zwischen den Ringen 2, 3 vorgesehene Bauteil die Wälzkörper 4 sind und/oder mindestens ein Kurzschlußblech 19 ist.

3. Revolverlager nach Anspruch 1 oder Anspruch 2
**dadurch gekennzeichnet,**
**dass** der Ringraum 7 zwischen den Ringen 2, 3 gegenüber der Umwelt vollständig von Kreisringscheiben abgedichtet ist, indem neben den beiden schon vorhandenen Kreisringscheiben 8.1, 8.2 zwei weitere, in geringem axialen Abstand A zueinander angeordnete Kreisringscheiben 9.1, 9.2 vorgesehen sind, wobei jede dieser Kreisringscheiben 9.1, 9.2 mit einem anderen Ring 2, 3 drehfest verbunden ist und sich radial in Richtung des anderen Rings 2, 3 erstreckt.

4. Resolverlager nach einem der Ansprüche 1 bis 3,
**dadurch gekennzeichnet,**
**dass** auch jede der weiteren Kreisringscheiben 9.1, 9.2 mit mindestens einem Segment 15.1, 15.2 aus einem magnetisch permeablen Werkstoff versehen ist,
**dass** die Segmente 15.1, 15.2 der weiteren Kreisringscheiben 9.1, 9.2 um einen Winkel von 90°/n gegeneinander verdreht sind, wobei n der Anzahl der Segmente 15.1, 15.2 je Kreisringscheibe entspricht, während in dieser Stellung der Segemente 15.1, 15.2 der weiteren Kreisringscheibe 9.1, 9.2 die Segmente 15.1, 15.2 der anderen Kreisringscheiben 8.1, 8.2 keinen gegenseitigen Winkelversatz zueinander einnehmen,
**dass** eine weitere Ringspule P2 und eine weitere Sekundärspule S2 vorgesehen ist und
**dass** diese Spulen P2, S2 im Ringraum 7 zwischen den weiteren Kreisringscheiben 9.1,9.2 und den Wälzkörpern 4 und /oder einem Kurzschlussblech 19 drehfest mit den Ringen 2, 3 verbunden sind.

5. Resolverlager nach einem der Ansprüche 1 bis 4
**dadurch gekennzeichnet,**
**dass** die Spulen P1, P2, S1, S2 jeweils mit dem stehenden der beiden Ringe 2, 3 verbunden sind.

6. Resolverlager nach einem der Ansprüche 1,2, 4 und 5
**dadurch gekennzeichnet,**
**dass** jede Kreisringscheibe 8.1, 8.2, 9.1, 9.2 eine Mehrzahl von Segmenten 15.1, 15.2 aufweist, die gleichmäßig in Umfangsrichtung der Kreisringscheiben 8.1, 8.2, 9.1, 9.2 verteilt angeordnet sind.

7. Resolverlager nach einem der Ansprüche 1 bis 6
**dadurch gekennzeichnet,**
**dass** die Kreisringscheiben 8.1, 8.2, 9.1, 9.2 aus einem Werkstoff gebildet sind, der keine oder nur eine sehr geringe magnetische Permeabilität hat, und
**dass** die Segmente 15.1, 15.2 in den Kreisringscheiben 8.1, 8.2, 9.1, 9.2 eingebettet angeordnet sind.

8. Resolverlager nach einem der Ansprüche 1 bis 7
**dadurch gekennzeichnet,**
**dass** entweder eine der Spulen P, S oder eine Einheit aus zwei Spulen, die mit der Modulationswirkung von zwei Kreisringscheiben 8.1, 8.2 oder 9.1, 9.2 in Verbindung stehen, zusammen mit einer der beiden Kreisringscheiben 8.1 oder 8.2 bzw. 9.1 oder 9.2 eine Baueinheit bilden, indem die entsprechende Kreisringscheibe 8.1, 8.2, 9.1 oder 9.2 seitlich an die Spule P oder S oder die Einheit von zwei Spulen angesetzt und verbunden ist, und
**dass** die jeweilige Baueinheit als solche in den Ringraum 7 eingesetzt und mit dem jeweiligen Ring 2, 3 drehfest verbunden ist.

## Claims

1. Resolver bearing comprising
an inner ring 2, an outer ring 3 and rolling bodies 4 which roll in the annular space 7 formed between the rings 2, 3 on raceways 5.1, 5.3 provided by the rings 2, 3,
a circular ring disc 8.1 which, to seal the annular space 7, is connected to one of the rings 2, 3 in a rotationally fixed manner and extends substantially radially in the direction of the other ring 2, 3,
a primary coil P1 and a secondary coil S1, and
a segment 15 which is formed from a magnetically permeable material,
**characterized**
**in that** the rings 2, 3 and a component 4, 19 provided between the rings 2, 3 are formed from a magnetically permeable material,
**in that** a further circular ring disc 8.2 is arranged next to the circular ring disc 8.1 at a slight axial distance A and nevertheless is connected to the other ring 2, 3 in a rotationally fixed manner and, however, likewise extends radially in the direction of the ring 2, 3 to which the further circular ring disc 8.2 is not connected,
**in that** each circular ring disc 8.1, 8.2 has at least one segment 15.1, 15.2 of a magnetically permeable material, and
**in that** the respective coils P1, S1 are formed as an annular coil and extend continuously about the axis of rotation R of the bearing and are connected to one of the rings 2, 3 in a rotationally fixed manner in the annular space 7 between the two circular ring discs 8.1, 8.2 and the component 4, 19,
and **in that** the inner ring 2, the outer ring 3, the component 4, 19 and the segments 15.1, 15.2 form a magnetic circuit M1.

2. Resolver bearing according to Claim 1,
**characterized**
**in that** the component provided between the rings 2, 3 is formed by the rolling bodies 4 and/or is at least one short-circuiting plate 19.

3. Revolver bearing according to Claim 1 or Claim 2,
**characterized**
**in that** the annular space 7 between the rings 2, 3 is completely sealed with respect to the environment by circular ring discs in that there are provided, in addition to the two already present circular ring discs 8.1, 8.2, two further circular ring discs 9.1, 9.2 which are arranged at a slight axial distance A from one another, wherein each of these circular ring discs 9.1, 9.2 is connected to another ring 2, 3 in a rotationally fixed manner and extends radially in the direction of the other ring 2, 3.

4. Resolver bearing according to one of Claims 1 to 3,
**characterized**
**in that** each of the further circular ring discs 9.1, 9.2 is also provided with at least one segment 15.1, 15.2 of a magnetically permeable material,
**in that** the segments 15.1, 15.2 of the further circular ring discs 9.1, 9.2 are arranged so as to be turned through an angle of 90°/n with respect to one another, where n corresponds to the number of segments 15.1, 15.2 per circular ring disc, whereas, in this position of the segments 15.1, 15.2 of the further circular ring discs 9.1, 9.2, the segments 15.1, 15.2 of the other circular ring discs 8.1, 8.2 assume no mutual angular offset with respect to one another,
**in that** a further annular coil P2 and a further secondary coil S2 is provided, and
**in that** these coils P2, S2 are connected to the rings 2, 3 in a rotationally fixed manner in the annular space 7 between the further circular ring discs 9.1, 9.2 and the rolling bodies 4 and/or a short-circuiting plate 19.

5. Resolver bearing according to one of Claims 1 to 4,
**characterized**
**in that** the coils P1, P2, S1, S2 are each connected to the stationary one of the two rings 2, 3.

6. Resolver bearing according to one of Claims 1, 2, 4 and 5,
**characterized**
**in that** each circular ring disc 8.1, 8.2, 9.1, 9.2 has a plurality of segments 15.1, 15.2 which are arranged in a uniformly distributed manner in the circumferential direction of the circular ring discs 8.1, 8.2, 9.1, 9.2.

7. Resolver bearing according to one of Claims 1 to 6,
**characterized**
**in that** the circular ring discs 8.1, 8.2, 9.1, 9.2 are formed from a material which has no or only a very small magnetic permeability, and
**in that** the segments 15.1, 15.2 are arranged embedded in the circular ring discs 8.1, 8.2, 9.1, 9.2.

8. Resolver bearing according to one of Claims 1 to 7,
**characterized**
**in that** either one of the coils P, S or a unit of two coils which are in connection with the modulation effect of two circular ring discs 8.1, 8.2 or 9.1, 9.2 form a structural unit together with one of the two circular ring discs 8.1 or 8.2 or 9.1 or 9.2 in that the corresponding circular ring disc 8.1, 8.2, 9.1 or 9.2 is positioned on and connected laterally to the coil P or S or the unit of two coils, and
**in that** the respective structural unit as such is inserted into the annular space 7 and is connected to the respective ring 2, 3 in a rotationally fixed manner.

## Revendications

1. Palier résolveur comportant
une bague intérieure 2, une bague extérieure 3 et des éléments roulants 4 qui se déroulent dans l'espace annulaire 7 formé entre les bagues 2, 3 sur des chemins de roulement 5.1, 5.3 formés par les bagues 2, 3,
une rondelle circulaire 8.1 qui est reliée à l'une des bagues 2, 3 pour rendre étanche l'espace annulaire 7 et qui s'étend de manière sensiblement radiale dans la direction de l'autre bague 2, 3,
une bobine primaire P1 et une bobine secondaire S1, et un segment 15 formé d'un matériau magnétiquement perméable,
**caractérisé en ce que** les bagues 2, 3 et un composant 4, 19 prévu entre les bagues 2, 3 sont formés à partir d'un matériau magnétiquement perméable,
**en ce qu'**une autre rondelle circulaire 8.2 est disposée à une faible distance axiale A de la rondelle circulaire 8.1, qui est cependant reliée solidaire en rotation à l'autre bague 2, 3 mais s'étend également dans la direction radiale de la bague 2, 3, à laquelle n'est pas reliée l'autre rondelle circulaire 8.2,
**en ce que** chaque rondelle circulaire 8.1, 8.2 présente au moins un segment 15.1, 15.2 constitué d'un matériau magnétiquement perméable, et
**en ce que** les bobines respectives P1, S1 sont réalisées sous la forme d'une bobine annulaire et s'étendent en continu autour de l'axe de rotation R du palier et sont reliées solidaires en rotation à l'une des bagues 2, 3 dans l'espace annulaire 7 entre les deux rondelles circulaires 8.1, 8.2 et le composant 4, 19
et **en ce que** la bague intérieure 2, la bague extérieure 3, le composant 4, 19 et les segments 15.1, 15.2 forment un circuit magnétique M1.

2. Palier résolveur selon la revendication 1,
**caractérisé en ce que** le composant prévu entre les bagues 2, 3 est constitué des éléments roulants 4 et/ou d'au moins une plaque de court-circuit 19.

3. Palier revolver selon la revendication 1 ou la revendication 2,
**caractérisé en ce que** l'espace annulaire 7 entre les bagues 2, 3 est rendu complètement étanche à l'environnement au moyen de rondelles circulaires en prévoyant, en plus des deux rondelles circulaires 8.1, 8.2 déjà présentes, deux autres rondelles circulaires 9.1, 9.2 disposées à une faible distance axiale A l'une de l'autre, dans lequel chacune desdites rondelles circulaires 9.1, 9.2 est reliée solidaire en rotation à une autre bague 2, 3 et s'étend radialement dans la direction de l'autre bague 2, 3.

4. Palier résolveur selon l'une des revendications 1 à 3,
**caractérisé en ce que** chacune des autres rondelles circulaires 9.1, 9.2 est également pourvue d'au moins un segment 15.1, 15.2 constitué d'un matériau magnétiquement perméable,
**en ce que** les segments 15.1, 15.2 des autres rondelles circulaires 9.1, 9.2 sont torsadés en sens opposé les aux autres d'un angle de 90°/n, où n correspond au nombre de segments 15.1, 15.2 par rondelle circulaire, alors que dans cette position des segments 15.1, 15.2 de l'autre rondelle circulaire 9.1, 9.2, les segments 15.1, 15.2 des autres rondelles circulaires 8.1, 8.2 ne présentent aucun décalage angulaire mutuel,
**en ce qu'**il est prévu une autre bobine annulaire P2 et une autre bobine secondaire S2 et
**en ce que** lesdites bobines P2, S2 sont reliées solidaires en rotation aux bagues 2, 3 dans l'espace annulaire 7 entre les autres rondelles circulaires 9.1, 9.2 et les éléments roulants 4 et/ou une plaque de court-circuit 19.

5. Palier résolveur selon l'une des revendications 1 à 4,
**caractérisé en ce que** les bobines P1, P2, S1, S2 sont respectivement reliées à l'arrêt des deux bagues 2, 3.

6. Palier résolveur selon l'une des revendications 1, 2, 4 et 5,
**caractérisé en ce que** chaque rondelle circulaire 8.1, 8.2, 9.1, 9.2 comporte une pluralité de segments 15.1, 15.2 uniformément répartis dans la direction circonférentielle des rondelles circulaires 8.1, 8.2, 9.1, 9.2.

7. Palier résolveur selon l'une des revendications 1 à 6,
**caractérisé en ce que** les rondelles circulaires 8.1, 8.2, 9.1, 9.2 sont constituées d'un matériau dont la perméabilité magnétique est nulle ou très faible et
**en ce que** les segments 15.1, 15.2 sont intégrés aux rondelles circulaires 8.1, 8.2, 9.1, 9.2.

8. Palier résolveur selon l'une des revendications 1 à 7, **caractérisé en ce que** l'une des bobines P, S ou une unité constituée de deux bobines qui sont en liaison avec l'effet de modulation de deux rondelles circulaires 8.1, 8.2 ou 9.1, 9.2, forment un composant structurel avec l'une des deux rondelles circulaires 8.1 ou 8.2 ou 9.1 ou 9.2, en fixant et reliant latéralement la rondelle circulaire correspondante 8.1, 8.2, 9.1 ou 9.2 à la bobine P ou S ou à l'unité constituée de deux bobines, et
**en ce que** le composant structurel respectif est inséré en tant que tel dans l'espace annulaire 7 et est relié solidaire en rotation à la bague respective 2,3.
